# EUROPÄISCHE PATENTSCHRIFT

(11) **EP 0 988 584 B1**
(45) Veröffentlichungstag und Bekanntmachung des Hinweises auf die Patenterteilung: **07.12.2005**
(21) Anmeldenummer: 98934834.7
(22) Anmeldetag: 29.05.1998
(51) Int. Cl.: G05B 19/4103

(54) **VERFAHREN UND VORRICHTUNG ZUR STEUERUNG EINES BAHNVORSCHUBS**
METHOD AND DEVICE FOR CONTROLLING A TOOL FEED
PROCEDE ET DISPOSITIF POUR LA COMMANDE D'UNE AVANCE DE CONTOURNAGE

(30) Priorität: 12.06.1997 DE 19724933
(43) Veröffentlichungstag der Anmeldung: 29.03.2000
(73) Patentinhaber: SIEMENS AKTIENGESELLSCHAFT, 80333 München (DE)
(72) Erfinder: WESTERMEYER, Wilhelm, D-90425 Nürnberg (DE); SPETH, Wolfgang, D-71723 Grossbottwar (DE)
(86) Internationale Anmeldenummer: PCT/DE1998/001480
(87) Internationale Veröffentlichungsnummer: WO 1998/057240

(56) Entgegenhaltungen:
- EP-A- 0 490 431
- EP-A- 0 706 104
- DE-A- 4 310 126
- US-A- 5 321 623

## Beschreibung

Die Erfindung bezieht sich auf ein Verfahren sowie eine Vorrichtung zur Steuerung des Bahnvorschubs einer numerisch gesteuerten Werkzeugmaschine, eines Roboters oder dergleichen, wobei über jedem Steuerungssatz der Bahnvorschub vorgegeben wird.

In der bekannten Technik numerischer Steuerungen, beispielsweise zum Einsatz bei Werkzeugmaschinen, wird je Teileprogrammsatz ein über den Satz konstanter Bahnvorschubwert programmiert. Ein solcher konstanter Bahnvorschub ist jedoch nur dann sinnvoll, wenn er charakteristisch für die Bearbeitungsbedingungen ist bzw. wenn die Bearbeitungsbedingungen über dem Satz konstant sind.

Ein konstanter Bahnvorschub ist beispielsweise dann nicht sinnvoll, wenn das Teileprogramm eine Maschinenachsbewegung einer nicht-kartesischen Maschine direkt vorgibt. Der Bahnvorschub ist in einem solchen Fall nicht repräsentativ für die Schnittbedingungen am Werkzeug. Sollen diese Schnittbedingungen konstant gehalten werden, was vorteilhaft ist, so muß sich der vorgegebene Bahnvorschub ändern.

Eine konstante Bahnvorschubvorgabe ist insbesondere auch ungünstig, wenn sich die Schnittbedingungen am Werkzeug durch eine variierende Konturkrümmung und damit verbunden einen variierenden Eingriffsbereich beispielsweise eines Fräsers ändern (z.B. Spirale durch Kreisvolvente).

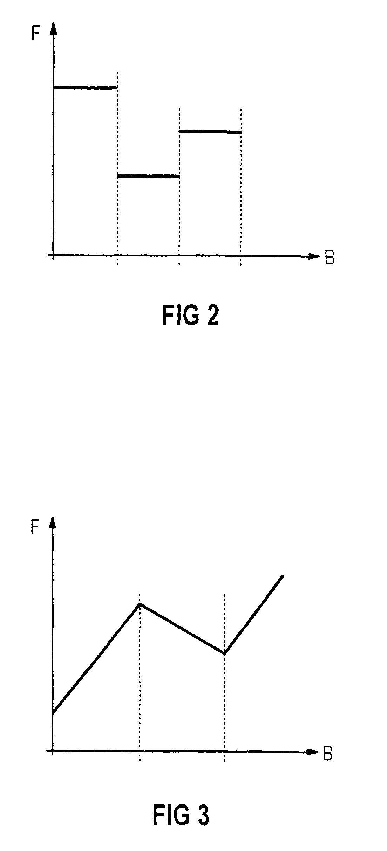

Herkömmlicherweise werden somit Bahnvorschubprofile so erzeugt, daß eine Unterteilung eines Teileprogramms in viele kurze Sätze erfolgt und für jeden dieser Steuerungssätze ein eigener, jeweils konstanter Vorschubwert vorgegeben wird. Das hierdurch erzeugte vorgegebene Bahnvorschubprofil stellt sich somit herkömmlicherweise als Vorschubtreppenprofil dar, wie es in der Darstellung gemäß FIG 2 gezeigt ist. Über die Abszisse ist der Bahnweg B dargestellt, welcher in mehrere Steuerungssätze (dargestellt in Form von senkrecht verlaufenden gestrichelten Linien) unterteilt ist. Über die Ordinate ist der Bahnvorschub F aufgetragen.

Um ein solches starres Vorschubtreppenprofil flexibler zu gestalten, ist die Vorgabe eines programmierbaren Vorschub-Overrideprofiles vorgeschlagen worden (vgl. hierzu insbesondere die Realisierung der Firma FANUC mit der Bezeichnung FS15/MA Involute Interpolation). Die bekannte Möglichkeit einer Geschwindigkeitsbeeinflussung durch Vorschub-Overridewerte beruht darauf, daß über einen Vorschub-Override eine Variation des programmierten Absolutvorschubs proportional im Bereich von 0 bis beispielsweise 200 % möglich ist, um sich geänderten technologischen Gegebenheiten, beispielsweise während der Bearbeitung eines Werkstückes, anpassen zu können. Bei den bekannten Verfahren werden nun Override-Stützpunkte über die Bahnlänge vorgegeben und es erfolgt eine lineare Interpolation des Overridewertes zwischen den Override-Stützpunkten.

Im ersten bekannten Fall der Vorgabe eines Vorschubtreppenprofils wird dieses gemäß der Parametrierung der Geschwindigkeitsführung sowie entsprechend der Dynamik von verwendeten Servos und Antrieben verschliffen. Neben dem Nachteil einer großen Anzahl von Teileprogrammsätzen und damit unhandlich großen Teileprogrammen erhält man das paradoxe Resultat, daß moderne dynamische Antriebe die Bearbeitungsqualität verschlechtern.

Durch die Anpassung des Bahnvorschubs über einen Override-Wert ist aufgrund einer Glättung der Geschwindigkeitsführung diese Anpassung stets zeitlich und damit auch örtlich verzögert. Damit wird die Erfüllung der Vorgaben (z.B. eine möglichst exakte Konturtreue) deutlich verschlechtert.

Aus der europäischen Patentanmeldung EP 0 706 104 A1 ist ein Verfahren zum Verschleifen nicht-tangentialer Bereich in programmierten Konturen, insbesondere zum Einsatz in numerisch gesteuerten Werkzeugmaschinensteuerungen, wobei anstelle von nicht-tangentialen Satzübergängen jeweils ein Überschleifelement eingesetzt wird, welches über ein Polynom möglichst weich in einem Standardverschleifbereich geführt wird, bekannt.

Aufgabe der vorliegenden Erfindung ist es daher, ein Verfahren sowie eine dazugehörige Vorrichtung zur Steuerung des Bahnvorschubs zu schaffen, welches eine möglichst große Flexibilität im Hinblick auf eine Geschwindigkeitsführung des Bahnvorschubs ermöglicht und sicherstellt, dass Geschwindigkeitsbegrenzungen unabhängig von der Maschinendynamik eingehalten werden, die den Nachteil vieler notwendiger Teileprogrammsätze überwindet und eine möglichst gute Bahntreue gewährleistet.

Gemäß der vorliegenden Erfindung wird diese Aufgabe durch ein Verfahren zur Steuerung des Bahnvorschubs einer numerisch gesteuerten Werkzeugmaschine, eines Roboters oder dergleichen, bei dem über jedem Steuerungssatz der Bahnvorschub vorgegeben wird, dadurch gelöst, daß ein Bahngeschwindigkeitsprofil des Bahnvorschubs direkt programmierbar ist, indem das Bahngeschwindigkeitsprofil des Bahnvorschubs außer als lineares Vorschubprofil auch als polynomiales Vorschubprofil oder als Vorschubspline über einem Steuerungssatz oder einer Folge von Steuerungssätzen vorgegeben werden kann, wobei im Falle eines Überschreitens einer zulässigen Achsdynamik durch das vorgegebene Bahngeschwindigkeitsprofil Minima im Verlauf des Bahnvorschubs steuerungssatzübergreifend vorausschauend angefahren werden.

Es erweist sich als vorteilhaft, dass das Bahngeschwindigkeitsprofil des Bahnvorschubs als lineares Vorschubprofil über einem Steuerungssatz vorgegeben wird.

Es erweist sich als vorteilhaft, dass das Bahngeschwindigkeitsprofil des Bahnvorschubs als polynomiales Vorschubprofil über einem Steuerungssatz oder einer Folge von Steuerungssätzen vorgegeben, wird.

Es erweist sich als vorteilhaft, dass das Bahngeschwindigkeitsprofil des Bahnvorschubs als Vorschubspline über einer Folge von Steuerungsätzen vorgegeben, wird.

Durch die voranstehenden vorteilhaften Weiterbildungen des Gegenstandes gemäß der vorliegenden Erfindung wird eine flexiblere Vorgabe des Bahnvorschubverlaufs ermöglicht, indem diese um lineare und kubische Verläufe erweiterbar wird. Die kubischen Verläufe können direkt oder als interpolierende oder approximierende Splines programmiert werden. Hierdurch lassen sich - abhängig von der Krümmung des zu bearbeitenden Werkstücks - kontinuierlich glatte Geschwindigkeitsverläufe für den Bahnvorschub programmieren. Solche Geschwindigkeitsverläufe ermöglichen eine ruckfreie Beschleunigungsänderung und hierdurch beispielsweise eine Fertigung gleichmäßiger Werkstückoberflächen.

In einer weiteren vorteilhaften Ausgestaltung des Verfahrens mit Vorgabe des Bahngeschwindigkeitsprofils als Vorschubspline oder -polynom werden als Stützpunkte des Vorschubsplines bzw. des Vorschubpolynoms jeweils am Steuerungssatzübergang mittels eines Prädiktoralgorithmus Bahnvorschubsollwerte vorgegeben, welche über einen interpolierenden Spline oder ein interpolierendes Polynom miteinander verbunden werden.

In einer weiteren vorteilhaften Ausgestaltung gemäß der vorliegenden Erfindung wird die Vorgabe des Bahngeschwindigkeitsprofiles als polynomiales Vorschubprofil über einer Folge von Steuerungssätzen oder als Vorschubspline über eine Folge von Steuerungssätzen dadurch weitergebildet, dass als Stützpunkte jeweils am Steuerungssatzübergang mittels eines Prädiktoralgorithmus Bahnvorschubsollwerte vorgegeben werden, zwischen denen über ein approximierendes Spline oder ein approximierendes Polynom der Bahnvorschub vorgegeben wird.

In einer weiteren vorteilhaften Ausgestaltung des Verfahrens gemäß der vorliegenden Erfindung wird darüber hinaus erreicht, daß auch beim Anfahren des Bahngeschwindigkeitsprofils sichergestellt ist, daß Geschwindigkeitsbegrenzungen unabhängig von der Maschinendynamik eingehalten werden. Dies wird erreicht, indem ein Anfahren des Bahngeschwindigkeitsprofils des Bahnvorschubes unter Wahrung der zulässigen Achsdynamik mit einer Glättung der Bahngeschwindigkeitsführung erfolgt.

In einer weiteren vorteilhaften Ausgestaltung des Verfahrens gemäß der vorliegenden Erfindung wird weiterhin erreicht, daß eine Achsüberlastung nach einem Stop oder einem Sprung im Vorschubprofil vermieden werden kann. Dies geschieht dadurch, daß im Falle eines Sprungs im Bahngeschwindigkeitsprofil des Bahnvorschubs und/oder bei Änderungen eines Bahnvorschub-Override-Wertes eine Glättung der Bahngeschwindigkeitsführung aktivierbar ist.

In einer weiteren vorteilhaften Ausgestaltung des Verfahrens gemäß der vorliegenden Erfindung wird ein möglichst geringer Fehler beim Verfahren des Vorschubprofiles erreicht, indem ein angefahrenes Bahngeschwindigkeitsprofil des Bahnvorschubs mit kompensierter oder abgeschalteter Glättung des Geschwindigkeitsprofils verfahren wird.

Um das Verfahren gemäß der vorliegenden Erfindung und die damit verbundenen Vorteile zur Lösung der eingangs gestellten Aufgabe auf besonders effektive Art und Weise realisieren zu können, wird weiterhin eine Vorrichtung zur Steuerung des Bahnvorschubs einer numerisch gesteuerten Werkzeugmaschine, eines Roboters oder dergleichen mit über jedem Steuerungssatz vorgebbarem Bahnvorschub vorgeschlagen, welche dadurch gekennzeichnet ist, daß Mittel vorgesehen sind, durch die ein Bahngeschwindigkeitsprofil des Bahnvorschubs direkt programmierbar ist, indem das Bahngeschwindigkeitsprofil des Bahnvorschubs außer als lineares Vorschubprofil auch als polynomiales Vorschubprofil oder als Vorschubspline über einem Steuerungssatz oder einer Folge von Steuerungssätzen vorgebbar ist, wobei im Falle eines Überschreitens einer zulässigen Achsdynamik durch das vorgegebene Bahngeschwindigkeitsprofil Minima im Verlauf des Bahnvorschubs steuerungssatzübergreifend vorausschauend anfahrbar ist.

Weitere Einzelheiten und Vorteile der vorliegenden Erfindung werden anhand der folgenden Beschreibung eines vorteilhaften Ausführungsbeispieles in Verbindung mit den Figuren deutlich. Es zeigen:
- FIG 1: Beispiel anhand einer graphischen Darstellung für die Programmierung verschiedener Bahnvorschubprofile gemäß der vorliegenden Erfindung,
- FIG 2: Vorschubtreppenprofil nach dem Stand der Technik,
- FIG 3: Beispiel der Programmierung eines linearen Bahngeschwindigkeitsprofiles,
- FIG 4: Beispiel eines polynomiales Bahngeschwindigkeitsprofiles über einen Steuerungssatz,
- FIG 5: Beispiel eines kubischen Bahngeschwindigkeitsprofiles durch Splineinterpolation über mehrere Steuerungssätze und
- FIG 6: Beispiel zur Vorschubprogrammierung und tatsächlich gefahrenes Vorschubprofil.

Der besseren Verständlichkeit halber soll im folgenden mit einer Beschreibung der Darstellungen der unterschiedlichen programmierten Bahngeschwindigkeitsprofile gemäß der Darstellungen nach den Figuren 2 bis 5 begonnen werden.

Die Darstellung gemäß FIG 2, welche ein Vorschubtreppenprofil nach dem Stand der Technik beschreibt, wurde bereits eingangs erläutert. In der Darstellung gemäß FIG 3 ist ebenfalls - wie bereits bei der Darstellung gemäß FIG 2 erläutert - über die Abszisse der Bahnweg B und über die Ordinate der Bahnvorschub F aufgetragen. Der Bahnweg B ist in mehrere Steuerungssätze aufgeteilt, was anhand von senkrecht verlaufenden gestrichelten Linien dargestellt ist. Der gezeigte Bahnvorschubverlauf wird jeweils vom aktuellen Wert am Satzanfang bis zum Satzende über den Bahnweg B linear eingefahren und gilt danach als modaler Wert. Ein solcher linearer Bahnvorschubverlauf wird im folgenden mit FLIN bezeichnet, während ein konstanter Bahnvorschubwert gemäß der Darstellung nach FIG 2 mit FNORM bezeichnet wird.

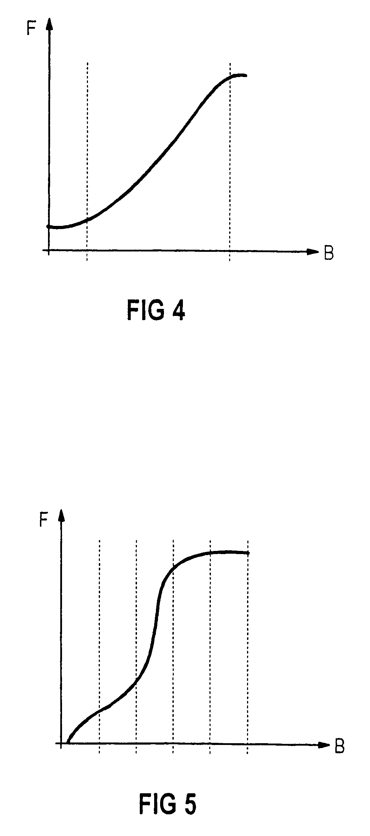

In der Darstellung gemäß FIG 4, welche den gleichen prinzipiellen Aufbau wie die Darstellungen gemäß FIG 2 und FIG 3 besitzt, ist der Vorschubverlauf über ein Polynom direkt programmiert. Dabei ist ein polynomialer Bahnvorschub über einen einzelnen Steuerungssatz gezeigt, in dem der Vorschubverlauf über ein Polynom vom aktuellen Wert bis zum Satzende geführt wird. Der Endwert gilt danach als modaler Wert. Ein solcher polynomialer Vorschubverlauf wird im folgenden mit FPO bezeichnet. Selbstverständlich ist auch ein Vorschubpolynom möglich, welches über eine Folge von mehreren Steuerungssätzen verläuft. Ein solches polynomiales Vorschubprofil FPO ist als interpolierendes Polynom oder als approximierendes Polynom ausführbar.

Bei einer Interpolation verläuft das gesuchte Vorschubprofil durch die vorgegebenen Stützstellen, so daß die gefundene Funktion gestattet, den Bahnvorschub zwischen den Stützstellen zu führen. Im Falle einer Approximation ist der gesuchte Bahnvorschub nach einer vorgebbaren Strategie zwischen den Stützstellen hindurchzulegen, ohne daß an den Stützstellen der approximierte Wert mit dem Vorschubsollwert der Stützstelle zusammenfallen muß.

In der Darstellung gemäß FIG 5, welche den gleichen prinzipiellen Aufbau wie die vorangehenden Darstellungen besitzt, ist ein Beispiel der Programmierung eines kubischen Bahngeschwindigkeitsprofiles mittels eine Vorschubsplines gezeigt. Dieser Vorschubspline wird über einer Folge von Steuerungsdatensätzen vorgegeben, welche wiederum durch senkrecht verlaufene gestrichelte Linien über den Bahnweg B dargestellt sind. Bei einem Spline handelt es sich um eine stückweise aus Polynomen zusammengesetzte Funktion. Dazu werden beispielsweise kubische Parabeln eingesetzt, die jeweils exakt durch zwei Stützstellen verlaufen. Bei n-Stützstellen setzt sich die Splinefunktion aus n-1 einzelnen Polynomen zusammen. Auf diese Weise wird eine Spline-Interpolation erreicht (zur Durchführung einer Spline-Interpolation wird beispielhaft verwiesen auf Schrüfer: Signalverarbeitung - Numerische Verarbeitung digitaler Signale, München; Wien: Hanser-Verlag 1990, Seite 77ff.).

In der Praxis existieren Fälle, in denen es wenig hilfreich ist, die Splinefunktion zu zwingen, exakt durch alle Stützstellen zu verlaufen. Sinnvoller ist es, eine Ausgleichung vorzunehmen und anstelle eines interpolierenden einen approximierenden Spline zu verwenden. Diesbezüglich zugrundeliegende Idee ist es, kubische Polynome mit den zunächst noch unbekannten Ordinaten-Werten so durch die Stützstellen hindurchzulegen, daß die Differenzen positiv proportional den Sprüngen der dritten Ableitung der Splinefunktion sind (Details hierzu sind insbesondere dem vorangehend skizzierten Werk von Schrüfer auf Seite 81 ff. zu entnehmen).

Der Bahnvorschub wird im Falle einer Splineinterpolation vom aktuellen Vorschubwert zum programmierten Vorschubwert bis zum Satzende in kubischem Verlauf eingefahren. Die satzweise programmierten Bahnvorschubwerte werden - bezogen auf den Satzendpunkt - durch einen Spline verbunden. Der Spline beginnt und endet tangential zur vorhergehenden bzw. nachfolgenden Vorschubangabe. Die Vorschubwerte dienen hierbei als Stützpunkte zur Berechnung der Splineinterpolation. Ein auf diese Weise kubisch geführtes Vorschubprofil wird im folgenden FCUB bezeichnet. Analog dazu kann eine Splineapproximation entsprechend den vorangehenden Ausführungen erfolgen.

Als Stützpunkte des Vorschubspline bzw. des Vorschubpolynoms werden jeweils am Steuerungssatzübergang mittels eines Prädiktoralgorithmus Bahnvorschubsollwerte vorgegeben, welche über einen interpolierenden Spline bzw. eine interpolierendes Polynom miteinander verbunden werden.

Dabei kann eine Interpolation des Vorschubprofils eines Satzes mittels eines Prädiktoralgorithmus beispielsweise folgendermaßen aussehen:
Ausgangspunkt: aktuelle Bahnposition s0 und Bahngeschwindigkeit v0
   1. Schätzen der zukünftigen Bahnposition aus linearer Extrapolation mit
      s11 = s0 + v0 *Ti
      und des zugehörigen Vorschubs mit
      v11 = Vorschubprofil (s11)
      unter Berücksichtigung eines anstehenden Override-Wertes, wobei Ti = Interpolatiomstakt
      ⇒ s0, v0, s11, v11
   2. Verbessern des Schätzwertes durch v11 nach
      s12 = s0 + (v0 + v11)/2 * Ti
      und
      v12 = Vorschubprofil (s12)
      sowie evtl. auch der Beschleunigung nach
      a12 = v12 * d(Vorschubprofil)/dt mit s = s12
      unter Berücksichtigung eines anstehenden Override-Wertes
      ⇒ s0, v0, v12, a12
   3. Anfahren von v12 und evt1. a12 unter Wahrung der vorgesehenen Beschleunigungs- und evt1. Ruckbegrenzung unter Berücksichtigung von Vorschubminima und Dynamikbegrenzungen
      ⇒ neue Bahnposition s1 und Bahngeschwindigkeit v1
      → Rücksprung zu 1.

Im weiteren soll der Einsatz der im vorangehenden dargestellten unterschiedlichen programmierbaren Vorschubprofile gemäß der vorliegenden Erfindung anhand eines Beispiel-Teileprogrammes näher erläutert werden. Für dieses Beispiel-Teileprogramm wurde die Vorschubprogrammierung nach DIN 66025 um lineare und kubische Verläufe entsprechend den im vorangehenden dargestellten Bezeichnungen FLIN, FPO und FCUB erweitert. Die kubischen Verläufe können direkt oder als interpolierende/approximierende Splines bzw. Polynome programmiert werden. Das Beispiel-Teileprogramm besteht aus 15 Steuerungssätzen N1 bis N15 und setzt sich aus den folgenden Anweisungen zusammen:
N1 F1000 FNORM G1 X8 G91 G64
N2 F2000 X7
N3 F=FPO(4000,6000,-4000) X16
N4 X6
N5 F3000 FLIN X5
N6 F2000 X8
N7 X5
N8 F1000 FNORM X5
N9 F1400 FCUB X8
N10 F2200 X6
N11 F3900 X7
N12 F4600 X7
N13 F4900 X5
N14 FNORM X5
N15 X20

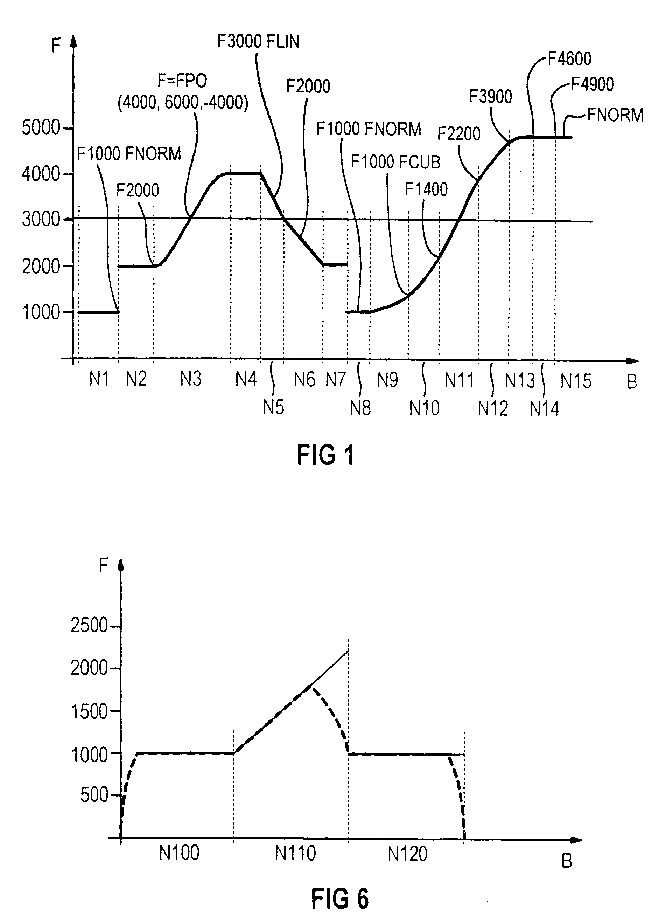

In der Darstellung gemäß FIG 1 ist das entsprechend dem Beispiel-Teileprogramm erzeugte Sollvorschubprofil dargestellt. Die Abszisse beschreibt wiederum den Bahnweg B, die Ordinate den Vorschub F. Der Bahnweg B ist - dargestellt durch senkrecht verlaufende gestrichelte Linien - in die einzelnen Sätze N1 bis N15 des Beispiel-Teileprogramms unterteilt. Dazwischen ist jeweils der durch die Vorschubprogrammierung des entsprechenden Steuerungssatzes resultierende Bahnvorschub aufgetragen. Steuerungssatz N1 besitzt ein konstantes Vorschubprofil. In Steuerungssatz N2 erfolgt eine sprunghafte Beschleunigungsänderung, worauf in Steuerungssatz N3 das Vorschubprofil über eine Polynom mit Vorschub 4000 am Satzende geführt ist. Steuerungssatz N4 beschreibt ein konstantes Vorschubprofil (Polynomvorschub gilt als modaler Wert). Die Steuerungssätze N5 und N6 besitzen ein linear fallendes Vorschubprofil, Steuerungssatz N7 beschreibt wiederum ein konstantes Vorschubprofil (linearer Vorschub gilt als modaler Wert). Steuerungssatz N8 weist ein konstantes Vorschubprofil mit sprunghafter Beschleunigungsänderung auf. In den Steuerungssätzen N9 bis N13 werden die satzweise programmierten Vorschubwerte mit Splines verbunden. In Steuerungssatz N13 wird das Splineprofil ausgeschaltet und es folgt wiederum ein konstantes Vorschubprofil.

Damit sichergestellt ist, daß Geschwindigkeitsbegrenzungen unabhängig von der Maschinendynamik eingehalten werden, erfolgt für den Fall, daß das vorgegebene Bahnvorschubprofil die zugelassende Achsdynamik überschreitet, ein satzübergreifendes, vorausschauendes Anfahren von Minima im Bahnvorschubverlauf. Dieser Zusammenhang ist anhand der Darstellung gemäß FIG 6 veranschaulicht. Über die Abszisse ist der Bahnweg B, über die Ordinate ebenfalls wiederum der Vorschub F aufgetragen. Es sind drei Steuerungssätze N100, N110 und N120 gezeigt. Die beiden Sätze N110 und N120 besitzen ein konstantes Vorschubprofil FNORM, während der Steuerungssatz N110 ein lineares Vorschubprofil FLIN besitzt. Ähnlich wie in der Darstellung gemäß FIG 1 ist diesbezüglich das Sollvorschubprofil anhand von durchgängigen Linien gezeigt. Das tatsächlich gefahrene Vorschubprofil ist anhand eines gestrichelt gezeigten Verlaufes veranschaulicht. Zu Beginn des Steuerungssatzes N100 bzw. zum Ende des Steuerungssatzes N120 ist anhand des tatsächlich gefahrenen Bahnvorschubprofiles erkennbar, wie das Sollvorschubprofil aufgrund der Dynamik des Servos und der Antriebe verschliffen wird. Im Steuerungssatz N110 mit linearem Vorschubprofil FLIN ist erkennbar, daß das lokale Minimum am Satzanfang des Steuerungssatzes N120 im Vorschubverlauf vorausschauend angefahren wird, da ansonsten das vorgegebene Bahnvorschubprofil die zugelassene Achsdynamik überschreiten würde.

Auch im Fall des Anfahrens des Bahnvorschubprofils nach einem Stop oder bei einem Sprung im Bahnvorschubprofil sowie bei Änderungen eines Vorschub-Override-Wertes kann unter Wahrung der zugelassenen Achsdynamik eine aktive Glättung der Geschwindigkeitsführung des Bahnvorschubs erfolgen, damit Geschwindigkeitsbegrenzungen der Maschinendynamik eingehalten werden. Ein bereits angefahrenes Bahnvorschubprofil kann jedoch anschließend mit kompensierter oder abgeschalteter Glättung der Geschwindigkeitsführung verfahren werden. Damit und durch den bereits erwähnten Prädiktoralgorithmus (welcher den Bahnvorschubsollwert zu dem zu bestimmenden Interpolationspunkt nahezu exakt liefert), kann das Bahnvorschubprofil mit vernachlässigbarem Fehler gefahren werden. Bei gekrümmten Bahnstücken kann der Bahnvorschub dadurch optimiert werden, daß ein eventuell vorgesehenes Vorschubpolynom FPO oder ein Vorschubspline FCUB nur mit konstanter Schnittgeschwindigkeit abgefahren werden. Hierdurch läßt sich ein beschleunigungsstetiges Sollvorschubprofil erzeugen. Darüber hinaus kann eine Überwachung vorgenommen werden, welche sicherstellt, daß bei einer möglichen Achsüberlastung die geschilderte Glättung der Geschwindigkeitsführung stoßfrei wieder aktiviert wird.

Alle in der vorstehenden Beschreibung erwähnten bzw. in den Figuren dargestellten Merkmale sollen, sofern der bekannte Stand der Technik dies zuläßt, für sich allein oder in Kombination als unter die Erfindung fallend angesehen werden.

Die vorangehende Beschreibung bevorzugter Ausführungsformen nach der Erfindung sind zum Zwecke der Veranschaulichung angegeben. Diese sind nicht erschöpfend. Auch ist die Erfindung nicht auf die genaue angegebene Form beschränkt, sondern es sind zahlreiche Modifikationen und Änderungen im Rahmen der vorstehend angegebenen technischen Lehre möglich. Eine bevorzugte Ausführungsform wurde gewählt und beschrieben, um die prinzipiellen Details der Erfindung und praktische Anwendungen zu verdeutlichen, um den Fachmann in die Lage zu versetzen, die Erfindung zu realisieren. Eine Vielzahl bevorzugter Ausführungsformen sowie weitere Modifikationen kommen bei speziellen Anwendungsgebieten in Betracht.

## Patentansprüche

1. Verfahren zur Steuerung des Bahnvorschubs (F) einer numerisch gesteuerten Werkzeugmaschine, eines Roboters oder dergleichen, wobei über jedem Steuerungssatz (N1...Nx) der Bahnvorschub (F) vorgegeben wird, **dadurch gekennzeichnet, daß** ein Bahngeschwindigkeitsprofil des Bahnvorschubs (F) direkt programmierbar ist, indem das Bahngeschwindigkeitsprofil des Bahnvorschubs außer als lineares Vorschubprofil (FLIN) auch als polynomiales Vorschubprofil (FPO) oder als Vorschubspline (FCUB) über einem Steuerungssatz oder einer Folge von Steuerungssätzen (N1...Nx) vorgegeben werden kann, wobei im Falle eines Überschreitens einer zulässigen Achsdynamik durch das vorgegebene Bahngeschwindigkeitsprofil Minima im Verlauf des Bahnvorschubs (F) steuerungssatzübergreifend vorausschauend angefahren werden.

2. Verfahren nach Anspruch 1, **dadurch gekennzeichnet, daß** als Stützpunkte des Vorschubspline (FCUB) bzw. des Vorschubpolynoms (FPO) jeweils am Steuerungssatzübergang mittels eines Prädiktoralgorithmus Bahnvorschubsollwerte (Fsoll) vorgegeben werden, welche über einen interpolierenden Spline bzw. eine interpolierendes Polynom miteinander verbunden werden.

3. Verfahren nach Anspruch 1, **dadurch gekennzeichnet, daß** als Stützpunkte des Vorschubspline (FCUB) bzw. des Vorschubpolynoms (FPO) jeweils am Steuerungssatzübergang mittels eines Prädiktoralgorithmus Bahnvorschubsollwerte (Fsoll) vorgegeben werden, zwischen denen über einen approximierenden Spline bzw. ein approximierendes Polynom der Bahnvorschub vorgegeben wird.

4. Verfahren nach einem der vorangehenden Ansprüche, **dadurch gekennzeichnet, daß** ein Anfahren des Bahngeschwindigkeitsprofils des Bahnvorschubs (F) unter Wahrung der zulässigen Achsdynamik mit einer Glättung der Bahngeschwindigkeitsführung erfolgt.

5. Verfahren nach einem der vorangehenden Ansprüche, **dadurch gekennzeichnet, daß** im Falle eines Sprungs im Bahngeschwindigkeitsprofil des Bahnvorschubs (F) und/oder bei Änderungen eines Bahnvorschub-Override-Wertes eine Glättung der Bahngeschwindigkeitsführung aktivierbar ist.

6. Verfahren nach einem der vorangehenden Ansprüche, **dadurch gekennzeichnet, daß** ein angefahrenes Bahngeschwindigkeitsprofil des Bahnvorschubs (F) mit kompensierter oder abgeschalteter Glättung des Geschwindigkeitsprofils verfahren wird.

7. Vorrichtung zur Steuerung des Bahnvorschubs (F) einer numerisch gesteuerten Werkzeugmaschine, eines Roboters oder dergleichen, bei der über jedem Steuerungssatz (N1...Nx) der Bahnvorschub (F) vorgebbar ist, **dadurch gekennzeichnet, daß** Mittel vorgesehen sind, durch die ein Bahngeschwindigkeitsprofil des Bahnvorschubs (F) direkt programmierbar ist, indem das Bahngeschwindigkeitsprofil des Bahnvorschubs außer als lineares Vorschubprofil (FLIN) auch als polynomiales Vorschubprofil (FPO) oder als Vorschubspline (FCUB) über einem Steuerungssatz oder einer Folge von Steuerungssätzen (N1...Nx) vorgebbar ist, wobei im Falle eines Überschreitens einer zulässigen Achsdynamik durch das vorgegebene Bahngeschwindigkeitsprofil Minima im Verlauf des Bahnvorschubs (F) steuerungssatzübergreifend vorausschauend anfahrbar ist.

## Claims

1. Method of controlling a tool feeding speed (F) of a numerically-controlled machine tool, a robot or such like, in which case, over each control block (N1...Nx) the feed speed (F) is prespecified, **characterized in that** a profile of the feeding speed (F) can be directly programmed **in that** the tool feeding speed profile can be specified other than as a linear tool feeding speed profile (FLIN) also as a polynomial feed profile (FPO) or as a feed spline (FCUB) over a control block or over a series of control blocks (N1...Nx), and if a admissible axis dynamic is exceed by the prespecified tool feeding speed profile, minimums in the sequence of the tool feed (F) are actuated in advance across the control blocks.

2. Method according to claim 1, **characterized in that**, as interpolation points of the feeding speed spline (FCUB) or the feeding speed polynomial, feeding speed setpoints (Fsoll) are each defined at the control block transition via a predictor algorithm, the tool feeding speed values being connected by one of an interpolating polynomial and interpolating spline.

3. Method according to claim 1, **characterized in that,** as interpolation points of the feeding speed spline (FCUB) or the feeding speed polynomial, feeding speed setpoints (Fsoll) are each defined at the control block transition via a predictor algorithm, the tool feeding speed values being connected by one of an approximating spline or an approximating polynomial.

4. Method according to claim 1, **characterized in that,** the tool feed speed (F) profile is entered with the admissible axis being observed and with smoothing of the feeding speed control.

5. Method according to one of the previous claims, **characterized in that** , in an event of a jump in the tool feeding speed (F) profile and/or changes in a feeding speed override value, smoothing of the feeding speed control can be activated.

6. Method according to one of the previous claims, **characterized in that**,an entered tool feeding speed profile of the tool feeding speed (F) is performed with compensating, and or disabling smoothing of the profile.

7. A device for controlling a tool feed speed (F) of a numerically-controlled machine tool, a robot or such like, in which, over each control block (N1...Nx) the feeding speed (F) is prespecified, **characterized in that** means are provided by which a profile of the feeding speed (F) can be directly programmed **in that** the tool feeding speed profile can be specified other than as a linear tool feeding speed profile (FLIN) also as a polynomial feed profile (FPO) or as a feed spline (FCUB) over a control block or over a series of control blocks (N1...Nx), and if a admissible axis dynamic is exceed by the prespecified tool feeding speed profile, minimums in the sequence of the tool feed (F) are actuated in advance across the control blocks.

## Revendications

1. Procédé pour la commande de l'avance (F) de trajectoire d'une machine outil à commande numérique, d'un robot ou analogue, l'avance (F) de trajectoire étant prescrite sur chaque bloc (N1... Nx) de commande, **caractérisé en ce qu'**un profil de vitesse de trajectoire de l'avance (F) de trajectoire peut être directement programmé par le fait que le profil de vitesse de trajectoire de l'avance de trajectoire peut être, sur un bloc de commande ou sur une succession de bloc (N1... Nx) de commande, prescrit non seulement comme profil (FLIN) d'avance linéaire mais aussi comme profil (FPO) d'avance polynomial ou comme courbe (FCUB) spline d'avance, sachant qu'en cas de dépassement d'une dynamique d'axe admissible par le profil prescrit de vitesse de trajectoire, on utilise par anticipation des minima dans l'allure de l'avance (F) de trajectoire en dépassant le bloc de commande.

2. Procédé suivant la revendication 1, **caractérisé en ce que**, comme points de soutien de la courbe (FCUB) spline d'avance ou respectivement du polynôme (FPO) d'avance, on prescrit à chaque transition de bloc de commande, au moyen d'un algorithme de prédiction, des valeurs (Fsoll) de consigne d'avance de trajectoire qui sont reliées entre elles par l'intermédiaire d'une courbe spline d'interpolation ou respectivement d'un polynôme d'interpolation.

3. Procédé suivant la revendication 1, **caractérisé en ce que**, comme points de soutien de la courbe (FCUB) spline d'avance ou respectivement du polynôme (FPO) d'avance, on prescrit à chaque transition de bloc de commande, au moyen d'un algorithme de prédiction, des valeurs (Fsoll) de consigne d'avance de trajectoire entre lesquelles l'avance de trajectoire est prescrite au moyen d'une courbe spline d'approximation ou respectivement d'un polynôme d'approximation.

4. Procédé suivant l'une des revendications précédentes, **caractérisé en ce que** l'utilisation du profil de vitesse de trajectoire de l'avance (F) de trajectoire s'effectue en respectant la dynamique d'axe admissible et avec un lissage du guidage de vitesse de trajectoire.

5. Procédé suivant l'une des revendications précédentes, **caractérisé en ce que** le lissage du guidage de vitesse de trajectoire peut être activé dans le cas d'un saut dans le profil de vitesse de trajectoire de l'avance (F) de trajectoire et/ou lors de modifications d'une valeur de surpassement (« override ») d'avance de trajectoire.

6. Procédé suivant l'une des revendications précédentes, **caractérisé en ce que** le profil utilisé de vitesse de trajectoire de l'avance (F) de trajectoire est parcouru en compensant ou en désactivant le lissage du profil de vitesse.

7. Dispositif pour la commande de l'avance (F) de trajectoire d'une machine outil à commande numérique, d'un robot ou analogue, suivant lequel l'avance (F) de trajectoire peut être prescrite sur chaque bloc (N1... Nx) de commande, **caractérisé en ce que** des moyens sont prévus par lesquels un profil de vitesse de trajectoire de l'avance (F) de trajectoire peut être directement programmé par le fait que le profil de vitesse de trajectoire de l'avance de trajectoire peut être, sur un bloc de commande ou sur une succession de blocs (N1... Nx) de commande, prescrit non seulement comme profil (FLIN) d'avance linéaire mais aussi comme profil (FPO) d'avance polynomial ou comme courbe (FCUB) spline d'avance, sachant qu'en cas de dépassement d'une dynamique d'axe admissible par le profil prescrit de vitesse de trajectoire, on utilise par anticipation des minima dans l'allure de l'avance (F) de trajectoire en dépassant le bloc de commande.
